# EUROPÄISCHE PATENTANMELDUNG

(11) **EP 3 235 861 A1**
(43) Veröffentlichungstag der Anmeldung: **25.10.2017**
(21) Anmeldenummer: 16165758.0
(22) Anmeldetag: 18.04.2016
(51) Int. Cl.: C08K 5/00

(54) **POLYMERISIERBARE ZUSAMMENSETZUNG**

(71) Anmelder: LANXESS Deutschland GmbH, 50569 Köln (DE)
(72) Erfinder: MORICK, Joachim, 51371 Leverkusen (DE); WITT, Michael, 95488 Eckersdorf (DE); GITTEL, Dieter, 51371 Leverkusen (DE); FUCHS, Dominic, 50733 Köln (DE); FRANK, Michaela, 51381 Leverkusen (DE)

(57) **Zusammenfassung**

Polymerisierbare Zusammensetzung, enthaltend
a) wenigstens ein zyklisches Amid,
b) 1.6 bis 5.0 vorzugsweise 1.8 bis 3.5 Gew.-% wenigstens eines geblockten Polyisocyanats, und
c) 0.8 bis 2.0 Gew.-% wenigstens eines Katalysators zur Polymerisation des zyklischen Amids und
d) 0.1 bis 0.8, vorzugsweise 0.3 bis 0.6 Gew.-% des Farbstoffs C.I. Solvent Black 7,
wobei die Gewichtsangaben der Komponenten a) bis d) sich auf die Summe der Komponenten a) bis d) beziehen und die Summe der Komponenten a) bis d) 100 % ergibt.

## Beschreibung

Die vorliegende Erfindung betrifft eine spezielle polymerisierbare Zusammensetzung, ein Verfahren zur ihrer Herstellung sowie ihre Verwendung und damit ein Verfahren zur Herstellung eines faserverstärkten Verbundwerkstoffs unter Verwendung dieser polymerisierbare Zusammensetzung.

Es ist bekannt, dass bei der Herstellung von Verbundkunststoffen, die aus einer textilen Verstärkungsstruktur und einer Polyamid 6 Matrix aufgebaut sind und deren PA 6 Matrix mit Hilfe einer in-situ Polymerisation gebildet wird, üblicherweise ein Lactam zusammen mit mindestens einem Katalysator und mindestens einem Aktivator in eine Kavität überführt wird, in welche zuvor das textile Verstärkungsgewebe eingelegt wurde.

Das Gewebe wird dabei zunächst durch die niedrigviskose Monomerschmelze getränkt und dann in der Form anionisch polymerisiert, wobei direkt oder "in-situ" das Verbundkunststoff-Bauteil entsteht. Ein solches Verfahren wird im Folgenden als "reaction injection moulding" von Polyamid 6, kurz RIM PA 6 bezeichnet.

Die Kunststoffmatrix von RIM PA 6 Verbundkunststoffen entspricht klassischem "Guss-PA 6";, siehe dazu auch P. Wagner, Kunststoffe 73, 10 (1983), Seiten 588 - 590.

Erst der Aktivator erlaubt es, die Polymerisationstemperatur so weit herabzusenken, dass die Polymerisation für technische Prozesse interessant wird und innerhalb weniger Minuten ein Verbundkörper aus der Form entnommen werden kann.

Als Aktivatoren für die anionische Caprolactampolymerisation werden bevorzugt Isocyanate und Säurehalogenide eingesetzt, insbesondere mit Caprolactam geblockte Isocanate.

Zur Erzielung guter mechanischer Eigenschaften ist bei FaserverbundWerkstoffen die Qualität der Anbindung zwischen Faser und Matrix wichtig. Aus diesem Grund werden Verstärkungsfasern meist mit einer sogenannten haftvermittelnden Schlichte vorbehandelt, um die geringe chemische Ähnlichkeit zwischen Fasern und umgebender Matrix zu verbessern. Die aufgebrachten Schlichten stellen damit die Verbindung oder den Kraftschluss zur eigentlichen Matrix her.

Die Herstellung von Faserverbundwerkstoffen ist bereits aus zahlreichen Veröffentlichungen bekannt, so beschreiben die WO2012/045806 und die WO2014/086757 Verfahren bei denen jeweils eine Monomermischung von Lactam, Aktivator und Katalysator in einem Schmelzverfahren hergestellt werden und dann in einem nachgelagerten Schritt mit einem Fasermaterial zu einem Faserverbundwerkstoffen umgesetzt zu werden.

Für viele Anwendungen ist eine Schwarzeinfärbung der Polyamid-Matrix wünschenswert. Übliche Schwarzeinfärbungen, wie Sie beispielsweise bei Polyamid-Sprizgussverfahren verwendet werden, basieren überwiegend auf Russ, der in verschiedenen Partikelgrößen kommerziell angeboten wird. Die Firma Orion Engineered Carbons GmbH, Hahnstrasse 49, 60528 Frankfurt, vertreibt derartige Russe unter der Bezeichnung Corax ®.

Derartige, vorzugsweise nanoteilige Russpartikel eignen sich jedoch schlecht für die Anwendung bei RIM PA 6 Verfahren, da eine ungleichmäßige Verteilung der Schwarzpigmente im resultierenden Verbundkunststoff resultiert. Der Verbundkunststoff erscheint optisch inhomogen und dadurch minderwertig. Darüber hinaus führen übliche im Russ enthaltenen Verunreinigungen häufig zu einer Erhöhung des Caprolactam-Restmonomergehaltes im fertigen Verbundkunststoff.

Zwar sind auch Farbstoffe wie Azinfarbstoffe zur Schwarzfärbung von Polyamidschmelzen beschrieben wie beispielsweise in DE 10117715, jedoch haben die Erfinder gefunden, dass bei Einsatz vor der Polymerisation die Polymerisation signifikant gestört wird, was sich u.a. an erhöhten Restmonomergehalten zeigt.

### Stellung der Aufgabe:

Es besteht daher weiterhin Bedarf an einer Lösung zur Herstellung eines schwarz eingefärbten faserverstärkten Verbundwerkstoffs, insbesondere über ein RIM PA 6 Verfahren, bei dem die Nachteile der aus dem Stand der Technik bekannten Verfahren vermieden werden und insbesondere eine gleichmäßige Schwarzeinfärbung des Verbundkunststoffes resultiert und gleichzeitig die Restmonomergehalte, bezogen auf die reine PA 6-Matrix, unterhalb von 1.0 Gew.-% liegen.

### Lösung der Aufgabe und Gegenstand der Erfindung:

Überraschend wurde nun gefunden, dass man die gestellte Aufgabe mit einer polymerisierbaren Zusammensetzung lösen kann, enthaltend
a) wenigstens ein zyklisches Amid,
b) 1.6 bis 5.0, vorzugsweise 1.8 bis 3.5 Gew.-% wenigstens eines geblockten Polyisocyanats, und
c) 0.8 bis 2.0 Gew.-% wenigstens eines Katalysators zur Polymerisation des zyklischen Amids und
d) 0.1 bis 0.8, vorzugsweise 0.3 bis 0.6 Gew.-% des Farbstoffes C.I. Solvent Black 7,
wobei die Gewichtsangaben der Komponenten b) bis d) sich auf die Summe der Komponenten a) bis d) beziehen und die Summe der Komponenten a) bis d) 100% ergibt.

Bevorzugt enthält die erfindungsgemäße polymerisierbare Zusammensetzung 50 bis 100 Gew.-% der Komponenten a) bis d), vorzugsweise 80 bis 100 Gew.-%, bezogen auf das Gesamtgewicht der Zusammensetzung. Besonders bevorzugt enthält die erfindungsgemäße polymerisierbare Zusammensetzung die Komponenten a) bis d) zu mehr als 95 Gew.-%, insbesondere mehr als 98 Gew.-%.

Auf diese Weise können tiefschwarze und vor allem gleichmäßig eingefärbte RIM PA6-Verbundkunststoffe hergestellt werden, die gleichzeitig geringe Restmonomergehalte unter 1.0 Gew.-%, bezogen auf die polymere Matrix, aufweisen.

### Komponente a)

Als zyklisches Amid der Komponente a) wird vorzugsweise ein Amid der allgemeinen Formel (I) eingesetzt, 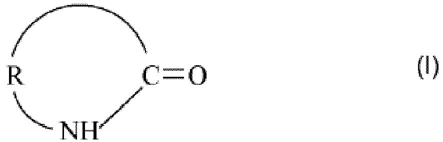 wobei R für eine C₃-C₁₃-Alkylengruppe, insbesondere für eine C₅-C₁₁-Alkylengruppe steht.

Als zyklische Amide der Komponente a) eignen sich insbesondere Lactame der Formel (I), wie ε-Caprolactam, 2-Piperidon (δ-Valerolactam), 2-Pyrrolidon (y-Butyrolactam), Önanthlactam, Lauryllactam, Laurinlactam oder deren Mischungen. Bevorzugt steht das zyklisches Amid der Komponente a) für Caprolactam, Lauryllactam oder deren Mischungen. Besonders bevorzugt wird als Lactam ausschließlich Caprolactam oder ausschließlich Lauryllactam eingesetzt.

### Komponente b)

Bei dem Aktivator der Komponente b) handelt es sich vorzugsweise um solche auf Basis geblockte aliphatische Polyisocyanate, wie Isophorondiisocyanat (IPDI) oder insbesondere solche der Formel OCN-(CH₂)₄₋₂₀-NCO wie Butylendiisocyanat, Hexamethylendiisocyanat (HDI), Octamethylendiisocyanat, Decamethylendiisocyanat, Undecamethylendiisocyanat oder Dodecamethylen-diisocyanat. Besonders bevorzugt ist geblocktes Hexamethylendiisocyanat (HDI).

Als Blockierungmittel der Polyisocyanate der Komponente b) ist Lactam blockiertes Isocanat bevorzugt, insbesondere Caprolactam-blockiertes Polyisocyanat. Dabei können grundsätzlich auch verschieden blockierte Polyisocyanate in einer Mischung zum Einsatz kommen.

Besonders bevorzugt ist Caprolactam geblocktes HDI, N,N'-Hexan-1,6-diylbis(hexahydro-2-oxo-1 H-azepine-1-carboxamid), CAS Nr.: 5888-87-9.

Das Massenverhältnis von dem zyklischen Amid der Komponente a) zu dem geblockten Polyisocyanat der Komponente b) kann in weiten Grenzen variiert werden und beträgt in der Regel 1: 1 bis 10000: 1, bevorzugt 5: 1 bis 2000: 1, besonders bevorzugt 20: 1 bis 1000: 1.

### Komponente c)

Der Katalysator c) zur Polymerisation des zyklischen Amids wird vorzugsweise ausgewählt aus der Gruppe, bestehend aus Natriumcaprolactamat, Kaliumcaprolactamat, Bromid-Magnesiumcaprolactamat, Chlorid-Magnesiumcaprolactamat, Magnesium-bis-Capro-lactamat, Natriumhydrid, Natrium, Natriumhydroxid, Natriummethanolat, Natriumethanolat, Natriumpropanolat, Natriumbutanolat, Kaliumhydrid, Kaliumhydroxid, Kaliummethanolat, Kaliumethanolat, Kaliumpropanolat und Kaliumbutanolat, bevorzugt aus der Gruppe bestehend aus Natriumhydrid, Natrium und Natriumcaprolactamat, besonders bevorzugt Natriumcaprolactamat.

Das Molverhältnis von zyklischem Amid a) zu Katalysator c) kann in weiten Grenzen variiert werden, es beträgt in der Regel 1: 1 bis 10000: 1, bevorzugt 5: 1 bis 1000: 1, besonders bevorzugt 1: 1 bis 500: 1.

### Komponente d)

Der Farbstoff C.I. Solvent Black 7 besitzt verschiedene CAS-Nummer wie insbesondere CAS 8005-02-5 oder CAS 101357-15-7.

C.I. Solvent Black 7 wird auch beschrieben als Reaktionsprodukt
- der Ausgangsstoffe Nitrobenzol, Anilin und Anilinhydrochlorid in Gegenwart eines Eisen- oder Kupfer-Katalysators, insbesondere bei einer Temperatur von 180 bis 200 °C und anschließender Isolierung als freie Base oder
- der Ausgangsstoffe Nitrophenol oder Nitrokresol, Anilin und Anilinhydrochlorid in Gegenwart eines Kupfer-Katalysators, insbesondere bei einer Temperatur von 180 bis 200 °C und anschließender Isolierung als freie Base.

Bevorzugte Handelsprodukte von C.I. Solvent Black 7 sind die handelsüblichen Nubian Black® TH 807, Nubian Black® TN 870 der Firma ORIENT CHEMICAL INDUSTRIES CO., LTD., 7-15,1-chome Minami-honmachi, Chuo-ku, Osaka,541-0054, Japan, oder NIGROSIN® der Firma Lanxess Deutschland GmbH.

Die erfindungsgemäße polymerisierbare Zusammensetzung kann ein oder mehrere Polymere enthalten, wobei das Polymer prinzipiell ausgewählt sein kann unter Polymeren, die bei der Polymerisation der erfindungsgemäß polymerisierbaren Zusammensetzung erhalten werden, davon verschiedenen Polymeren und Polymerblends.

In einer geeigneten Ausführungsform kann die erfindungsgemäße polymerisierbare Zusammensetzung auch Füllstoff enthalten. Füllstoffe, insbesondere partikuläre Füllstoffe können eine weite Bandbreite von Teilchengrößen aufweisen, die von staubförmigen bis grobkörnigen Partikeln reichen. Als Füllmaterial kommen organische oder anorganische Füll- und/oder Faserstoffe in Frage. Beispielsweise können anorganische Füllstoffe, wie Kaolin, Kreide, Wollastonit, Talkum, Calciumcarbonat, Silikate, Titandioxid, Zinkoxid, Graphit, Glaspartikel, z.B. Glaskugeln, nanoskalige Füllstoffe, wie Kohlenstoff-Nanoröhren, Carbon black, nanoskalige Schichtsilikate, nanoskaliges Aluminiumoxid (Al₂O₃), nanoskaliges Titandioxid (TiO₂), Carbon Nanotubes, Graphen, Schichtsilikate und nanoskaliges Siliciumdioxid (SiO₂), eingesetzt werden. Zwar können Ruße auch mitverwendet werden, bevorzugt ist ihr Anteil jedoch kleiner als 1 Gew.-%, insbesondere kleiner als 0,1 Gew.-%.

Bevorzugt werden Füllstoffe in einer Menge von 0 bis 90 Gew.-%, insbesondere von 0 bis 50 Gew.-%, bezogen auf die erfindungsgemäße polymerisierbare Zusammensetzung eingesetzt.

Weiterhin können ein oder mehrere Faserstoffe zum Einsatz kommen. Diese sind vorzugsweise ausgewählt aus bekannten anorganischen Verstärkungsfasern, wie Borfasern, Glasfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Insbesondere bevorzugt ist der Einsatz von Glasfasern, Kohlenstofffasern, Aramidfasern, Borfasern oder Metallfasern. Die genannten Fasern werden bevorzugt als Endlosfasern, beispielsweise in Form von Tapes, Gelegen, Geweben oder Gestricken eingesetzt. Es ist auch möglich, eine nicht geordnete Faserablage, beispielsweise in Form von Matten, Vliesen oder auch Schnittfasern unterschiedlichen Faserlänge, insbesondere von 0,1 mm bis mehrere cm Länge, vorzugsweise bis 5 cm Länge einzusetzen.

Der Einsatz dieser Fasermaterialien erfolgt jedoch vorzugsweise erst in der Anwendung der erfindungsgemäßen polymerisierbaren Zusammensetzung zur Herstellung der erfindungsgemäßen faserverstärkten Verbundwerkstoffs.

In einer bevorzugten Ausführungsform kann die erfindungsgemäße polymerisierbare Zusammensetzung einen oder mehrere weitere Zusatzstoffe enthalten. Als Zusatzstoffe können beispielsweise Stabilisatoren, wie Kupfersalze, Farbstoffe, Antistatika, Trennmittel, Antioxidantien, Lichtstabilisatoren, PVC-Stabilisatoren, Gleitmittel, Trennmittel, Treibmittel, und Kombinationen daraus zugesetzt werden. Bevorzugt sind diese Zusatzstoffe in einer Menge von 0 bis 5 Gew.-%, bevorzugt von 0 bis 4 Gew.-%, besonders bevorzugt von 0 bis 3,5 Gew.-%, bezogen auf das Gesamtgewicht der polymerisierbaren Zusammensetzung. Werden als Zusatzstoffe Flammschutzmittel oder Schlagzähigkeitsverbesserer eingesetzt, so können diese Zusatzstoffe von 0 bis 45 Gew.-%, bezogen auf das Gesamtgewicht der polymerisierbaren Zusammensetzung eingesetzt werden.

Die polymerisierbare Zusammensetzung kann wenigstens einen Zusatzstoff enthalten, vorzugsweise in einer Menge von wenigstens 0,01 Gew.-%, bezogen auf das Gesamtgewicht der polymerisierbaren Zusammensetzung, besonders bevorzugt von wenigstens 0,1 Gew.-%, bezogen auf das Gesamtgewicht der polymerisierbaren Zusammensetzung, insbesondere von wenigstens 0,5 Gew.-%, bezogen auf das Gesamtgewicht der polymerisierbaren Zusammensetzung.

Bevorzugt enthält die erfindungsgemäß polymerisierbare Zusammensetzung als Zusatzstoff wenigstens einen Schlagzähigkeitsverbesserer. Wird als Schlagzähigkeitsveresserer eine polymere Verbindung eingesetzt, so wird diese den zuvor genannten Polymeren zugerechnet. Insbesondere wird als Schlagzähigkeitsverbesserer ein Polydien-Polymer (z. B. Polybutadien, Polyisopren) eingesetzt. Diese enthalten bevorzugt Anhydrid- und/oder Epoxigruppen. Das Polydien-Polymer weist insbesondere eine Glasübergangstemperatur unter 0 °C, bevorzugt unter -10 °C, besonders bevorzugt unter -20 °C auf. Das Polydien-Polymer kann auf der Basis eines Polydien-Copolymers mit Polyacrylaten, Poly-ethylenacrylaten und/oder Polysiloxanen basieren und mittels der gängigen Verfahren hergestellt werden (z.B. Emulsionspolymerisation, Suspensionspolymerisation, Lösungspolymerisation, Gasphasenpolymerisation).

Bevorzugt liegt die polymerisierbare Zusammensetzung in Form ihrer Schmelze vor. Dies ist vorzugsweise der Fall bei ihrer Schmelztemperatur oder darüber, vorzugsweise bei einer Temperatur von größer 70 °C.

### Herstellung der polymerisierbaren Zusammensetzung

Die Erfindung betrifft weiterhin ein Verfahren zur Herstellung der polymerisierbaren Zusammensetzung dadurch gekennzeichnet, dass man ein zyklisches Amid der Komponente a) mit wenigstens einem geblocketen Polyisocyanat der Komponente b) und wenigstens einem Katalysator der Komponente c) und einem Farbstoff der Komponente d) in Kontakt bringt.

Vorzugsweise werden zur Bereitstellung der polymerisierbaren Zusammensetzung die Komponenten b) und c) zunächst unabhängig von einander in a) gemischt, anschließend dann diese Einzelmischungen miteinander gemischt. Weiterhin vorzugsweise wird der Farbstoff d) zu einer oder beiden der unabhängigen Bereitung von a) und b) zugegeben.

Dabei kann das Mischen in fester Form der jeweiligen Einzelkomponenten a) und b) und d) sowie von a) und c) und d) erfolgen oder in flüssiger, aufgeschmolzener Form. Bevorzugt wird d) in a) und b) gemischt. Die dabei erhaltene Aktivatorzusammensetzung enthaltend
a) wenigstens ein zyklisches Amid,
b) 1.6 bis 5.0 vorzugsweise 1.8 bis 3.5 Gew.-% wenigstens eines geblockten Polyisocyanats, und
d) 0.1 bis 0.8, vorzugsweise 0.3 bis 0.6 Gew.-% des Farbstoffs C.I. Solvent Black 7,
wobei die Gewichtsangaben der Komponenten b) und d) sich auf die Summe der Komponenten a) bis d) beziehen, ist ebenfalls Gegenstand der Erfindung.

Bevorzugt enthält die erfindungsgemäße Aktivatorzusammensetzung 50 bis 100 Gew.% der Komponenten a), b) und d), vorzugsweise 80 bis 100 Gew.-%, bezogen auf das Gesamtgewicht der Aktivatorzusammensetzung. Besonders bevorzugt enthält die erfindungsgemäße Aktivatorzusammensetzung die Komponenten a), b) und d) zu mehr als 95 Gew.%, insbesondere mehr als 98 Gew.-%.

Die erfindungsgemäße Aktivatorzusammensetzung enthält vorzugsweise keinen Katalysator der Komponente c).

Die erfindungsgemäße Aktivatormischung kann als feste Mischung aber auch in Form ihrer Schmelze vorliegen.

Grundsätzlich gilt das gleiche auch für eine Katalysatormischung, enthalten die Komponenten a) c) und d), wobei die Mengenangabe für die Komponente c) 0.8 bis 2.0 Gew.-% wenigstens eines Katalysators zur Polymerisation des zyklischen Amids, bezogen auf die Summe von a), c) und d), beträgt und die übrigen Angaben den obigen zur Aktivatorzusammensetzung analog entsprechen.

Bevorzugt erfolgt das Vermischen der zuvor bereiteten separaten Mischungen in flüssiger Form, vorzugsweise bei einer Temperatur von 70 bis 120 °C. Dabei wird der Aktivator insbesondere in Form der erfindungsgemäßen Aktivatorzusammensetzung eingesetzt. Zum Überführen der flüssigen Mischphase der Komponenten a), b), c) und d) wird vorzugsweise eine Temperatur gewählt, die gleich oder grösser ist als der Schmelzpunkt der resultierenden Mischung.

Das Vermischen der Komponenten kann diskontinuierlich oder kontinuierlich erfolgen. Geeignete Vorrichtungen zum Vermischen der Komponenten sind dem Fachmann bekannt. Zum diskontinuierlichen Vermischen werden vorzugsweise Rührkessel oder Kneter verwendet. Kontinuierliche Mischvorgänge erfolgen vorzugsweise im Extruder oder einer Spritzgießmaschine, sowie auch durch statische Mischelemente, welche in einem Mischkopf oder direkt mit im Werkzeug implementiert sind. Auch aus der Polyurethan-Verarbeitung bekannte Hochdruck-Mischköpfe, bei denen die Vermischung durch die kinetische Energie des Materials erreicht wird, können eingesetzt werden.

Die Mischvorrichtung ist vorzugsweise temperierbar. Das Vermischen der Komponenten kann beispielsweise kontinuierlich in einem Extruder erfolgen.

Die Einzelkomponenten der Aktivatoren als auch die Katalysatoren, können auch in Form von fertigen Handelsprodukten eingesetzt werden.

Ein möglicher Aktivator der Komponente b) ist Caprolactam-blockiertes Hexamethylendiisocyanat in Caprolactam, beispielsweise kommerziell unter der Bezeichnung Brüggolen® C20 von der Firma Brüggemann oder Addonyl® 8120 von der Firma Rhein Chemie Rheinau GmbH.

Als Katalysator kann eine Lösung von Natriumcaprolactamat in Caprolactam eingesetzt werden, z.B. Brüggolen© C10 der Firma Brüggemann, das 17 bis 19 Gew.-% Natriumcaprolactamat in Caprolactam bzw. Addonyl KAT NL der Firma Rhein Chemie Rheinau GmbH, das 18,5 Gew.-% Natriumcaprolactamat in Caprolactam enthält. Als Katalysator c) eignet sich ebenfalls insbesondere Bromid-Magnesiumcaprolactamat, z. B. Brüggolen® C1 der Firma Brüggemann.

Als Farbstoff kann Nubian Black^{®} der Firma ORIENT CHEMICAL INDUSTRIES CO., LTD, Japan eingesetzt werden, insbesondere die Typen TN 807 und TN 870. Die polymerisierbare Zusammensetzung wird im Allgemeinen im flüssigen Zustand in der Nähe der Polymerisationstemperatur gehandhabt und besitzt daher eine hohe Reaktivität, so dass sich ein zügiges Inkontaktbringen mit der Faserverstärkung empfiehlt.

### Herstellung eines Faserverbundwerkstoffs

Die Erfindung betrifft weiterhin ein Verfahren zur Herstellung eines Faserverbundwerkstoffs, dadurch gekennzeichnet, dass man
i) die erfindungsgemäße polymerisierbare Zusammensetzung oder deren Einzelkomponenten a), b), c) und d) mit Fasern in Kontakt bringt und
ii) die resultierende Zusammensetzung bei einer Temperatur von 120 bis 300 °C, vorzugsweise bei 120 bis 250 °C, insbesondere bei 140 bis 180 °C behandelt.

Bevorzugt ist die erfindungsgemäße Herstellung eines Faserverbundwerkstoffs auch dadurch gekennzeichnet, dass man
i) die erfindungsgemäße Aktivatorzusammensetzung mit der Einzelkomponente c), insbesondere mit einer Mischung der Komponenten a) und c) und anschließend mit Fasern in Kontakt bringt und
ii) die resultierende Zusammensetzung bei einer Temperatur von 120 bis 300 °C behandelt.

Hierbei können die Fasern mit der polymerisierbaren Zusammensetzung auf verschiedenen Wegen in Kontakt gebracht werden.
1) Indem in eine beheizte, vorzugsweise mit einer Temperatur von 120 bis 170 °C, druckdichte Form Fasern, insbesondere textile-Verstärkungsstrukturen, eingelegt werden und mittels Überdruck die polymerisierbare Zusammensetzung hineingepresst wird, wobei die Faser vorzugsweise infiltriert wird und dann ggf. bei einer erhöhten Temperatur, vorzugsweise bei 120 bis 300 °C, die polymerisierbare Zusammensetzung polymerisiert.
2) Indem bei ansonsten gleichem Aufbau wie unter 1 an der druckdichten Form ein Vakuum angelegt wird und die erfindungsgemäße polymerisierbare Zusammensetzung eingesogen wird.
3) Durch eine Kombination von Unterdruck und Überdruck wie unter 1 und 2 die polymerisierbare Zusammensetzung in die Form überführt wird.
4) Die Herstellung in einem Extruder stattfindet, dessen Eingangsströme Fasern, insbesondere Kurzfasern, und die polymerisierbare Zusammensetzung enthalten, wobei der Extruder bei einer Temperatur oberhalb der Schmelztemperatur des aus der polymerisierbaren Zusammensetzung resultierenden Polymers, insbesondere PA6, PA 12 bzw. die Copolymere betrieben wird.
5) Die Herstellung in einem Extruder stattfindet, dessen Eingangsströme eine oder mehrere Einzelkomponenten der erfindungsgemäßen polymerisierbaren Zusammensetzung in fester oder flüssiger Form und Fasern enthalten.
6) Die Herstellung durch klassisches Schleudergussverfahren stattfindet, wobei die erfindungsgemäßen polymerisierbare Zusammensetzung oder deren Einzelkomponenten a), b), c) und d) in fester oder flüssiger Form eingetragen werden und mit Fasern, vorzugsweise in Form von Kurzfasern oder in Form von textilen Verstärkungsstrukturen, verstärkt werden.
7) Die Herstellung kontinuierlich durch Tränkung von Fasern, insbesondere von Geweben erfolgt, die nach Aufbringen der erfindungsgemäßen polymerisierbaren Zusammensetzung in flüssiger Form bei einer Temperatur von 120 bis 300 °C polymerisiert wird, wodurch Composite Sheets oder Organobleche, Profile oder Rohre aus endlosfaserverstärkten Polyamiden entstehen.

Bevorzugt ist die Alternative 1, 2 oder 3, wobei in eine beheizbare, druckdichte Form Fasern, insbesondere textile-Verstärkungsstrukturen, eingelegt werden. Anschließend wird die polymerisierbare Zusammensetzung mittels Überdruck von 1 bis 150 bar und/oder bei einem Unterdruck der Form (Werkzeug) von 10 bis 900 mbar in die Form überführt.

Nach vollständiger Füllung der Form mit der erfindungsgemäßen polymerisierbaren, eingefärbten Zusammensetzung erfolgt die Polymerisation bei Temperaturen von 120 bis 250 °C, vorzugsweise bei 140 bis 180 °C. Es entsteht direkt in der Form das Verbundbauteil.

Ebenfalls bevorzugt ist die obige Verfahrensweise, wobei in Abänderung an der druckdichten Form ein Unterdruck angelegt wird, vorzugsweise von 5 bis 800 mbar und die polymerisierbare Zusammensetzung in die Form gesogen wird und nach Befüllen der Form mit der polymerisierbaren Zusammensetzung die Temperatur zur Polymerisation vorzugsweise auf eine Temperatur von 120 bis 250 °C erhöht wird.

Auch eine Kombination von Unterdruck und Überdruck zum Befüllen der Form mit der polymerisierbaren Zusammensetzung ist möglich.

Vorteilhaft ist es weiterhin, die Polymerisation in einem klassischen Schleudergussverfahren vorzunehmen, wobei die polymerisierbare Zusammensetzung in fester oder flüssiger Form in die Form eingetragen wird und die Fasern in Form von Kurzfasern oder in Form von zuvor ausgelegten textilen Verstärkungen eingebracht werden.

Bei der Herstellung der erfindungsgemäß polymerisierbaren Zusammensetzung, wie auch bei der erfindungsgemäßen Herstellung der faserverstärkten Verbundwerkstoffe, kann es vorteilhaft sein, den Anteil von an der Herstellung der polymerisierbaren Zusammensetzung oder des faserverstärkten Verbundwerkstoffs nicht beteiligten Komponenten so gering wie möglich zu halten. Dazu zählen speziell Wasser, Kohlendioxid und/oder Sauerstoff. In einer speziellen Ausführung sind daher die eingesetzten Komponenten und Apparaturen im Wesentlichen frei von Wasser, Kohlendioxid und/oder Sauerstoff. Eine Möglichkeit ist, dass die verwendete geschlossene Werkzeugkavität zunächst mit Vakuum beaufschlagt wird, bevor die Schmelze injiziert wird. Eine weitere zusätzliche Option ist das Verwenden von Inertgas, wie z.B. Stickstoff oder Argon. Die verwendete polymerisierbare Zusammensetzung wie auch die Füll- oder Verstärkungsstoffe (Fasern, wie textile Flächengebilde) können in Inertgasatmosphäre gelagert bzw. damit überlagert werden.

### Fasern

Bevorzugt werden im erfindungsgemäßen Verfahren als Fasern Kurzfasern, Langfasern, Endlosfasern oder Mischungen davon eingesetzt.

Im Sinne der Erfindung haben "Kurzfasern" eine Länge von 0,1 bis 1 mm, "Langfasern" eine Länge von 1 bis 50 mm und "Endlosfasern" eine Länge von grösser als 50 mm. Endlosfasern werden zur Herstellung der faserverstärkten Verbundwerkstoffe, vorzugsweise in Form einer textilen Struktur, z. B. als Gewebe, Gewirke, Gestricke, Gelege oder Vliese eingesetzt. Bauteile mit gestreckten Endlosfasern erzielen in der Regel sehr hohe Steifigkeits- und Festigkeitswerte.

Bevorzugt wird als Fasermaterial ein aus parallel angeordneten Endlos-Garnen oder Endlos-Rovings, welche zu textilen Flächengebilden wie Gelegen, Tapes, Geflechten und Geweben u. ä. weiter verarbeitet wurden, eingesetzt. Diese Flächengebilde werden auch als Verstärkungsstrukturen bezeichnet.

Die vorstehend benannten textilen Flächengebilde können ein- oder mehrlagig sowie in unterschiedlicher Kombination bezüglich textiler Flächengebilde, Faserarten und deren Fasermengen verwendet werden. Bevorzugt werden Gelege, Multiaxial-Gelege, (Multiaxial-) Geflechte oder Gewebe eingesetzt, die aus zwei oder mehr als zwei, vorzugsweise 2 bis 12 Lagen bestehen.

Die eingesetzten Fasermaterialien enthalten als Fasern vorzugsweise solche aus anorganischen Mineralien wie Kohlenstoff, beispielsweise als Niedermodulcarbonfasern oder Hochmodulcarbonfasern, silikatische und nicht silikatische Gläser der verschiedensten Art, Bor, Siliciumcarbid, Metalle, Metalllegierungen, Metalloxide, Metallnitride, Metallcarbide und Silikate, sowie organische Materialien wie natürliche und synthetische Polymere, beispielsweise Polyacrylnitrile, Polyester, Polyamide, Polyimide, Aramide, Flüssigkristallpolymere, Polyphenylensulfide, Polyetherketone, Polyetheretherketone, Polyether-imide, Baumwolle, Cellulose und andere Naturfasern, beispielsweise Flachs, Sisal, Kenaf, Hanf, Abaca. Bevorzugt sind hochschmelzende Materialien, beispielsweise Gläser, Kohlenstoff, Aramide, Flüssigkristallpolymere, Polyphenylensulfide, Polyetherketone, Polyetheretherketone und Polyetherimide, besonders bevorzugt sind Glasfasern, Kohlenstofffasern, Aramidfasern, Stahlfasern, Keramikfasern und/oder sonstige hinreichend temperaturbeständige polymere Fasern oder Fäden.

Fasern können in einer Menge von 5 bis 65 Vol.-%, bezogen auf den resultierenden Faserverbundwerkstoff, entsprechend beispielsweise bei Verwendung von Glasfasern 10 - 80 Gew.-%, eingesetzt werden, bevorzugt aber in einer Menge von 45-65 Vol.-%, bezogen auf den Faserverbundwerkstoff, wobei besonders bevorzugte Fasern Glasfasern und Kohlefasern sind.

Das erfindungsgemäße Verfahren ermöglicht eine sehr gute Imprägnierung der Verstärkungsfasern mit der eingefärbten aktivierten Caprolactamschmelze, eine gleichmäßige Einfärbung des resultierenden Verbundkunststoffes bei gleichzeitig geringen Restmonomergehalten und zusätzlich wirtschaftlich akzeptable Polymerisationszeiten und die Bildung von Produkten mit guten mechanischen Eigenschaften.

Mit Hilfe des erfindungsgemäßen Verfahrens ist es möglich, faserverstärkte Verbundwerkstoffe mit einem hohen Faseranteil und, falls vorhanden, Füllstoffanteil herzustellen.

Besonders bevorzugt, ist das erfindungsgemäße Verfahren, wenn man die polymerisierbare Zusammensetzung oder deren Einzelkomponenten a), b), c) und d) mit 5 bis 65 Vol.-% Fasern, insbesondere Glasfasern und Kohlefasern, bezogen auf den resultierenden Faserverbundwerkstoff, bevorzugt in einer Menge von 45-65 Vol.-% in Kontakt bringt.

Besonders bevorzugt ist das erfindungsgemäße Verfahren zur Herstellung eines Faserverbundwerkstoffs mit einem Faseranteil, insbesondere Glas- und Kohlefaseranteil von 45 - 65 Vol-%, wobei ein Restgehalt an monomerem Amid a) von höchstens 1.0 Gew.-%, bezogen auf die Polymermatrix, erzielt wird.

### Beispiele:

In einem Dreihalskolben wurden 200 g ε-Caprolactam und die in den Tabellen angegebenen Mengen an Katalysator, Natriumcaprolactamat, CAS-Nr. 2123-24-2 (18,5 Gew.-%ig in Caprolactam; in Form von Addonyl Kat NL (Rhein Chemie Rheinau GmbH)) eingewogen.

Ein zweiter Dreihalskolben wurde mit 200g ε-Caprolactam und mit der ebenfalls in den Tabellen spezifizierten Mengen an Aktivator Addonyl 8120 und mit 1.0 Gew.-% Schwarzeinfäbungsmittel der Komponente d) befüllt.

Bei Addonyl 8120 handelt es sich um ein beidseitig Caprolactam-geblocktes Hexamethylendiisocyanat, konkret um N,N'-Hexan-1,6-diylbis(hexahydro-2-oxo-1H-azepine-1-carboxamid), CAS Nr.: 5888-87-9.

Der Inhalt beider Kolben wurde in auf 120 °C vorgeheizten Ölbädern aufgeschmolzen. Anschließend wurde bei dieser Temperatur für 10 Minuten evakuiert. Dann wurden beide Kolben mit Stickstoff befüllt und die Ölbäder entfernt. Die Schmelzen wurden abgekühlt bis die Temperatur der Schmelzen 110 °C betrug.

In eine auf 160 °C vortemperierte und mit N₂ gespülte druckdichte Form (Plattenwerkzeug) wurden Glasfasergelege eingelegt und danach die Kavität evakuiert (100mbar).

Im nächsten Schritt wird der Inhalt des Vorratsbehälters durch den Unterdruck von 100 mbar in die Kavität des Plattenwerkzeugs überführt und darin auspolymerisiert. Der Faservolumengehalt war bei allen hergestellten Verbundplatten konstant und lag bei ca. 50 Vol.-%. Die Restmonomergehalte des Faserverbundwerkstoffes wurden über Extraktion bestimmt.

Kommerziell erhältliche Farbmittel bzw. Schwarzeinfärbungen wurden von folgenden Firmen verwendet:
Nubian Black TH 807 und TN870 der Firma ORIENT CHEMICAL INDUSTRIES CO., LTD, Japan
Corax N 660, N550, N339, Carbon Black XPB538 der Orion Engineered Carbons GmbH, Frankfurt
Eisenoxisschwarz (Bayferrox^{®}-schwarz, 375) der Lanxess Deutschland GmbH.

Die Ergebnisse in tabellarischer Form:

**Tabelle 1: Verwendete Polymerisationsrezepturen und die damit erzielten Restmonomergehalte sowie die Homogenität der Schwarzverteilung: Entnahme der Platte aus der Form nach 5 Minuten (Mengen in Gramm)**

| | Faser* | Addonyl 8120 Gew-% | Kat NL** Gew.-% | Homogenität der Schwarzverteilung auf der Verbundplatte (Notenschlüssel: siehe unten) | RMG |
|---|---|---|---|---|---|
| VGB 1 | A | 1,69 | 3,21 | 1 | 1,6 |
| VGB 2 | A | 1,69 | 3,21 | 1 | 2,5 |
| VGB 3 | A | 1,69 | 3,21 | 3 | 1,0 |
| VGB 4 | A | 1,69 | 3,21 | 3 | 1,1 |
| VGB 5 | A | 1,69 | 3,21 | 3 | 0,9 |
| VGB 6 | A | 1,69 | 3,21 | 5 | 1,0 |
| VGB 7 | A | 1,69 | 3,21 | 5 | 1,0 |

| | | | | | |
|---|---|---|---|---|---|
| * Verstärkung A: Glasfasergewebe der Firma Interglas, Typ 92125 mit einem Flächengewicht von 280g/m². Dabei handelt es sich um eine Faser mit einer handelsüblichen, auf Polyamid abgestimmten, nicht reaktiven Schlichte. In die Kavität der Form des Plattenwerkzeugs wurden jeweils 9 Lagen des Gewebetyps eingelegt. ** Anteil an Katalysator pur: 0.59 Gew.-% bezogen auf die Matrix. | | | | | |

### Abkürzungen:

- VGB:: Vergleichsbeispiel
VGB 1: Nubian Black TH807
VGB 2: Nubian Black TN870
VGB 3: Corax N339
VGB 4: Corax N550
VGB 5: Corax N660
VGB 6: Bayferrox^{®}-schwarz 375
VGB 7: Carbon Black XPB538
- Beurteilung der Homogenität:: 1: vollkommen gleichmäßige Verteilung
3: deutliche Unterschiede in der Einfärbung erkennbar
5: extreme Unterschiede in der Einfärbung
- RMG:: Restmonomergehalt, bezogen auf die Polymer-Matrix

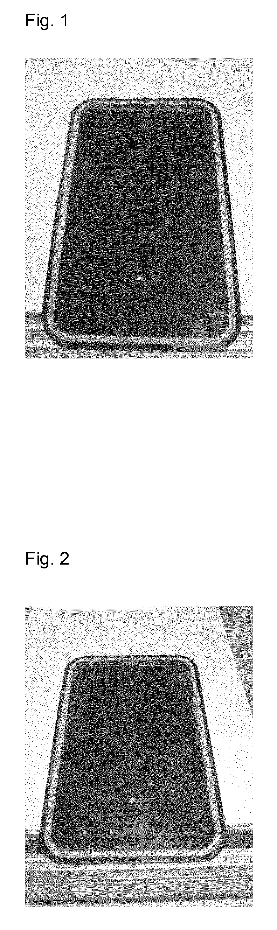

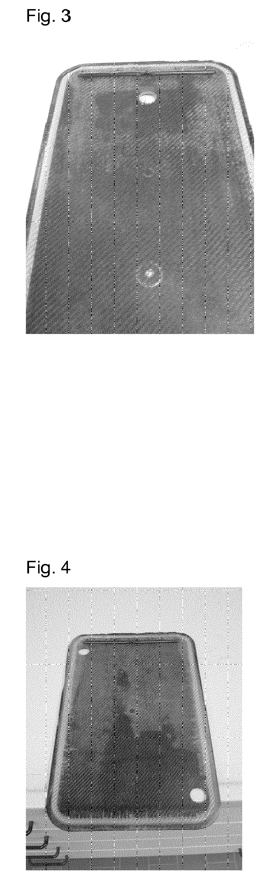

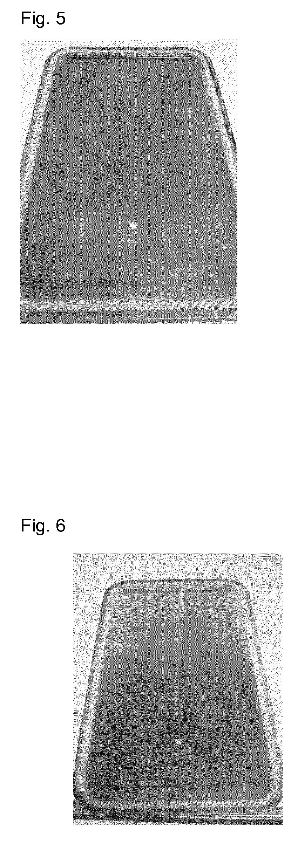

Photographien der eingefärbten Verbundplatten zur Visualisierung der Schwarzeinfärbung, Reihenfolge entsprechend der Auflistung in Tabelle 1 siehe in Fig. 1 bis Fig. 7.

**Tabelle 2: Verwendete Polymerisationsrezepturen und die damit erzielten Restmonomergehalte sowie die Verteilungsgüte und der optische Eindruck der Schwarzeinfärbung, Entnahme der Platte aus der Form nach 5 Minuten (Mengen in Gramm)**

| | Faser * | Addonyl 8120 Gew-% | Kat NL** Gew.-% | Homogenität der Schwarzverteilung auf der Verbundplatte (Notenschlüssel: siehe unten) | RMG |
|---|---|---|---|---|---|
| EFG 1 | A | 2.0 | 6.0 | 1 | 0.7 |
| EFG 2 | A | 2.0 | 6.0 | 1 | 0.8 |
| VGB 8 | A | 2.0 | 6.0 | 3 | 0.9 |
| VGB 9 | A | 2.0 | 6.0 | 3 | 0.9 |
| VGB 10 | A | 2.0 | 6.0 | 3 | 0,8 |
| VGB 11 | A | 2.0 | 6.0 | 5 | 0.9 |
| VGB 12 | A | 2.0 | 6.0 | 5 | 0.8 |

| | | | | | |
|---|---|---|---|---|---|
| * Verstärkung A: Glasfasergewebe der Firma Interglas, Typ 92125 mit einem Flächengewicht von 280g/m². Dabei handelt es sich um eine Faser mit einer handelsüblichen, auf Polyamid abgestimmten, nicht reaktiven Schlichte. In die Kavität der Form des Plattenwerkzeugs wurden jeweils 9 Lagen des Gewebetyps eingelegt. ** Anteil an Katalysator pur: 1.11 Gew.-% bezogen auf die Matrix. | | | | | |

### Abkürzungen:

- VGB:: Vergleichsbeispiel
- EFG:: Erfindungsgemäß
EFG 1: Erfindungsgemäß, Nubian Black TH807
EFG 2: Erfindungsgemäß, Nubian Black TN870
VGB 8: Corax N339
VGB 9: Corax N550
VGB 10: Corax N660
VGB 11: Bayferrox^{®}-schwarz 375
VGB 12: Carbon Black XPB538
- Beurteilung der Homogenität:: 1: vollkommen gleichmäßige Verteilung
3: deutliche Unterschiede in der Einfärbung erkennbar
5: extreme Unterschiede in der Einfärbung
- RMG:: Restmonomergehalt, bezogen auf die Polymer-Matrix

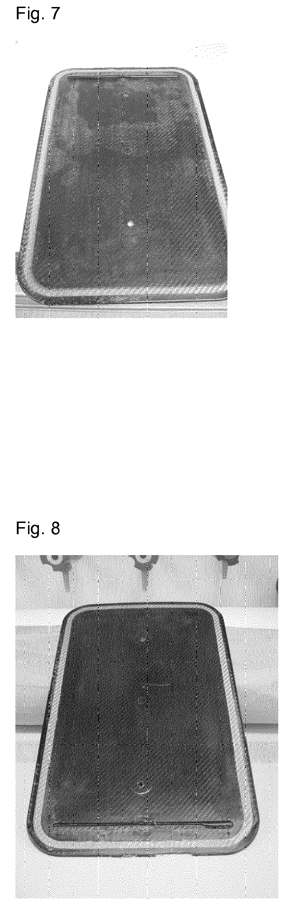

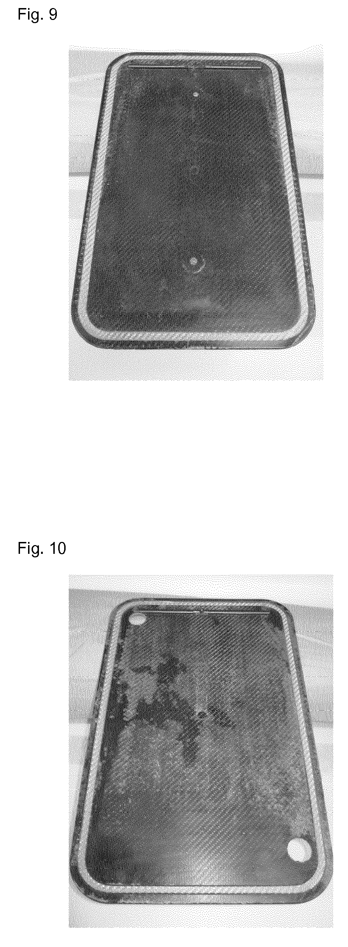

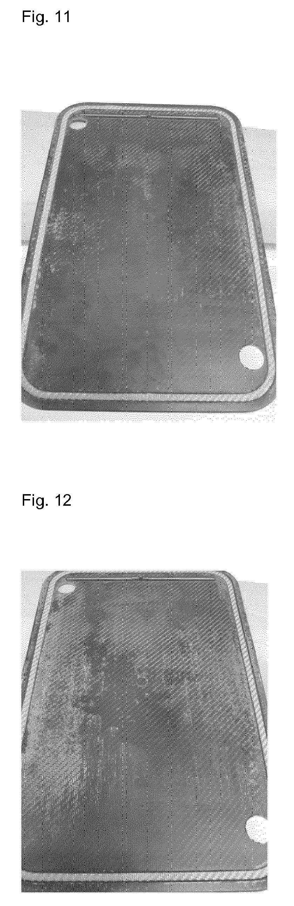

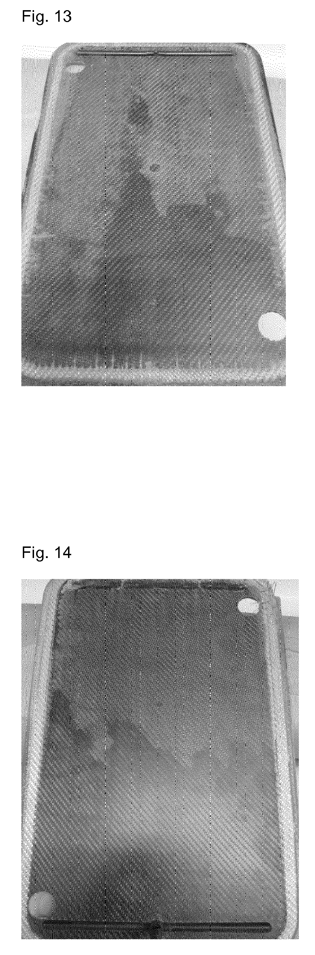

Photographien der eingefärbten Verbundplatten zur Visualisierung der Schwarzeinfärbung, Reihenfolge entsprechend der Auflistung in Tabelle 2 siehe in Fig. 8 bis Fig. 14 (wobei EFG1 = Fig.8, EFG2 = Fig.9 ...).

## Patentansprüche

1. Polymerisierbare Zusammensetzung, enthaltend
a) wenigstens ein zyklisches Amid,
b) 1.6 bis 5.0 vorzugsweise 1.8 bis 3.5 Gew.-% wenigstens eines geblockten Polyisocyanats, und
c) 0.8 bis 2.0 Gew.-% wenigstens eines Katalysators zur Polymerisation des zyklischen Amids und
d) 0.1 bis 0.8, vorzugsweise 0.3 bis 0.6 Gew.-% des Farbstoffs C.I. Solvent Black 7,
wobei die Gewichtsangaben der Komponenten b) bis d) sich auf die Summe der Komponenten a) bis d) beziehen und die Summe der Komponenten a) bis d) 100 % ergibt.

2. Polymerisierbare Zusammensetzung gemäß Anspruch 1, **dadurch gekennzeichnet, dass** das zyklisches Amid der allgemeinen Formel (I) entspricht, 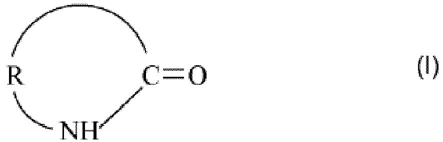 wobei R für eine C₃-C₁₃-Alkylengruppe, insbesondere für eine C₅-C₁₁-Alkylengruppe steht.

3. Polymerisierbare Zusammensetzung nach wenigstens einem der Ansprüche 1 bis 2, **dadurch gekennzeichnet, dass** das zyklisches Amid Lauryllactam, Caprolactam oder deren Mischung entspricht.

4. Polymerisierbare Zusammensetzung nach wenigstens einem der vorangegangenen Ansprüche, **dadurch gekennzeichnet**, die Komponente b) wenigstens HDI als geblocktes Isocyanat enthält.

5. Polymerisierbare Zusammensetzung nach wenigstens einem der vorangegangenen Ansprüche 1 bis 4, enthaltend wenigstens einen Katalysator c) zur Polymerisation des cyclischen Amids ausgewählt aus der Gruppe, bestehend aus Natriumcaprolactamat, Kaliumcaprolactamat, Bromid-Magnesiumcaprolactamat, Chlorid-Magnesiumcaprolactamat, Magnesium-bis-Caprolactamat, Natriumhydrid, Natrium, Natriumhydroxid, Natriummethanolat, Natriumethanolat, Natriumpropanolat, Natriumbutanolat, Kalium-hydrid, Kaliumhydroxid, Kaliummethanolat, Kaliumethanolat, Kaliumpropanolat und Kalium-butanolat, bevorzugt aus der Gruppe bestehend aus Natriumhydrid, Natrium und Natriumcaprolactamat, besonders bevorzugt Natriumcaprolactamat.

6. Polymerisierbare Zusammensetzung nach wenigstens einem der vorangegangenen Ansprüche 1 bis 5, **dadurch gekennzeichnet, dass** die Zusammensetzung zu mehr als 95 Gew.-%, insbesondere mehr als 98 Gew.-% aus den Komponenten a) bis d) besteht.

7. Verfahren zur Herstellung einer Polymerisierbare Zusammensetzung nach wenigstens einem der vorangegangenen Ansprüche 1 bis 6, **dadurch gekennzeichnet, dass** man ein zyklisches Amid der Komponente a) mit wenigstens einem geblocketen Polyisocyanat der Komponente b) und wenigstens einen Katalysator der Komponente c) und wenigstens einem Farbstoff der Komponente d) in Kontakt bringt.

8. Aktivatorzusammensetzung enthaltend
a) wenigstens ein zyklisches Amid,
b) 1.6 bis 5.0, vorzugsweise 1.8 bis 3.5 Gew.-% wenigstens eines geblockten Polyisocyanats, und
d) 0.1 bis 0.8, vorzugsweise 0.3 bis 0.6 Gew.-% des Farbstoffs C.I. Solvent Black 7,
wobei die Gewichtsangaben der Komponenten b) und d) sich auf die Summe der Komponenten a), b) und d) beziehen und die Summe der Komponenten a) b) und d) 100 % ergibt.

9. Aktivatorzusammensetzung nach Anspruch 8, **dadurch gekennzeichnet, dass** die Zusammensetzung zu mehr als 95 Gew.-%, insbesondere mehr als 98 Gew.-% aus den Komponenten a), b) und d) besteht

10. Verfahren zur Herstellung eines Faserverbundwerkstoffs, **dadurch gekennzeichnet, dass** man
i) die polymerisierbare Zusammensetzung gemäß wenigstens einem der Ansprüche 1 bis 7 oder deren Einzelkomponenten a), b), c) und d) mit Fasern in Kontakt bringt und
ii) die resultierende Zusammensetzung bei einer Temperatur von 120 bis 300 °C behandelt.

11. Verfahren zur Herstellung eines Faserverbundwerkstoffs gemäß Anspruch 10, **dadurch gekennzeichnet, dass** man
i) die Aktivatorzusammensetzung nach Anspruch 9 oder Anspruch 10 mit der Einzelkomponente c), insbesondere mit einer Mischung der Komponenten a) und c) und anschließend mit Fasern in Kontakt bringt und
ii) die resultierende Zusammensetzung bei einer Temperatur von 120 bis 300 °C behandelt.

12. Verfahren gemäß einem der Ansprüche 10 oder 11, **dadurch gekennzeichnet, dass** man die polymerisierbare Zusammensetzung gemäß wenigstens einem der Ansprüche 1 bis 6 oder deren Einzelkomponenten a), b), c) und d) mit 5 bis 65 Vol.-%, bevorzugt mit 45 bis 65 Vol.-% Fasern, bezogen auf den Faserverbundwerkstoff, in Kontakt bringt.

13. Verfahren gemäß wenigstens einem der Ansprüche 10 bis 12, **dadurch gekennzeichnet, dass** als Fasern Glasfasern eingesetzt werden.
